# EUROPEAN PATENT SPECIFICATION

(11) **EP 1 331 142 B1**
(45) Date of publication and mention of the grant of the patent: **17.05.2006**
(21) Application number: 03001273.6
(22) Date of filing: 22.01.2003
(51) Int. Cl.: B60R 21/20

(54) **Airbag module with multiple inflators**
Luftsackmodul mit mehreren Gasgeneratoren
Module de coussin gonflable avec plusieurs gonfleurs

(30) Priority: 29.01.2002 US 352659 P
(43) Date of publication of application: 30.07.2003
(73) Proprietor: KEY SAFETY SYSTEMS, INC., Sterling Heights, Michigan 48314 (US)
(72) Inventor: Langbeen, Lawrence R., Attica, Michigan 48412 (US); Ford, Brian C., Mt. Clemens, Michigan 48043 (US); Fowler, Todd, Shelby Township, Michigan 48317 (US)
(74) Representative: Gislon, Gabriele

(56) References cited:
- US-A- 5 671 945
- US-A- 5 857 696
- US-A- 6 036 222
- US-B1- 6 168 200

## Description

The present invention relates to an airbag module.

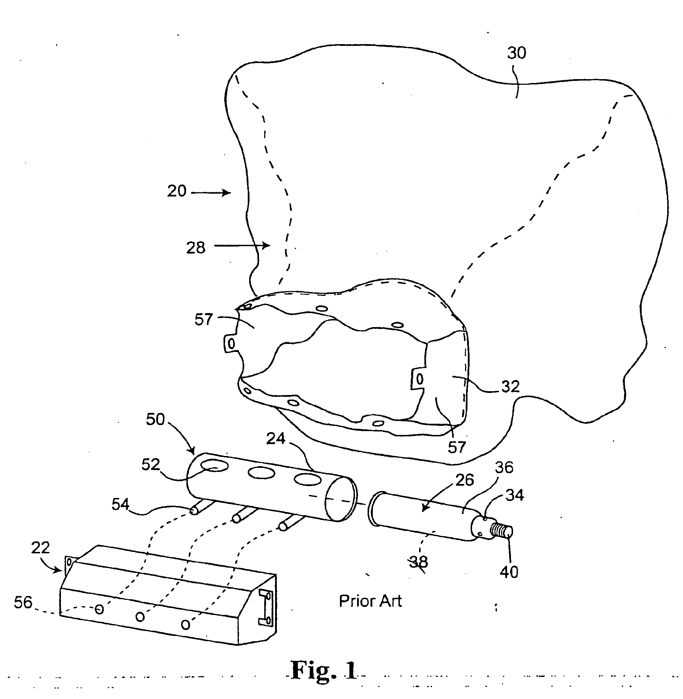

FIGURE 1 illustrates a prior art airbag module 20 comprising a housing 22, a manifold 24, a cylindrical inflator 26 and an airbag 28. The airbag includes an inflatable or cushion portion 30 and a neck portion 32. The inflator 26 includes a plurality of exit ports 34 located at one end of the inflator body 36. This construction is typical of hybrid inflators. In view of the asymmetry of the location of the exit ports, inflation gas flow is asymmetric, at least in relation to a longitudinal axis of the inflator. As known, a hybrid inflator includes a pressure chamber 38 for stored gas and will usually include one mounting fastener such as a threaded bolt-like fastener 40 at a remote end of the inflator. To achieve a more uniform distribution of the inflation gas, the inflator 26 can be received within a hollow diffuser 50, also known as a manifold, which includes a plurality of more uniformly distributed exit ports 52, which span the width of the neck 32. The diffuser 50 includes a means for attaching it and the inflator to a support structure. This means may include fasteners 54, which extend through openings 56 in the housing 22. The housing and inflator are positioned within the neck portion 32 of the airbag 28 and are enveloped by a portion of the neck, which includes facing overlapping flaps 57. The airbag is folded and secured about the inflator and manifold. A subassembly comprising the manifold, inflator and folded airbag is inserted within the open mouth of the housing 22.

US Patent n. 6036222, which comprises the features mentioned in the preamble of claim 1, concerns a driver airbag module provided with two cylindrical inflators mounted between a base plate and an inflator retainer which is fixed to the base plate to define cylindrical recesses for receiving the same inflators. The dual cylindrical inflators are positioned upside down with respect one to the other, i.e. the end of the first inflator provided with gas outlet openings is adjacent to the end of the second inflator unprovided with such openings and vice versa. Transfer openings (66, 72) in the base plate and in the inflator retainer direct gas from the inflators toward an air bag mounted in a cover on the outer side of the base plate. The inflators are mounted outside the airbag and transfer openings are provided to diffuse the gas flow, by operating as a manifold into the airbag, in order to make the gas flow as uniform as possible.

US 5,857,696 concerns a single inflator airbag module wherein the air bag is made by forming a base cloth into the shape of a bag and stitching the base cloth using non-extendable stitching in the vicinity of the .inflator, with extendable stitching in areas distant from the inflator, in order to prevent gas leakage in the vicinity of the inflator even if the output of the inflator is high and to thereby eliminate damage that might otherwise be suffered by the stitching thread in the vicinity of the inflator. In order to make the gas flow from the inflator more uniform a manifold is provided which rounds the same inflator.

US 6,168,200 concerns a dual level inflator wherein two inflators are lodged, in an upside down configuration, and wherein a diffuser is provided in the shape of a common outer housing for make the gas flow as uniform as possible.

US 5,671,945 concerns an airbag module which includes a single inflator provided with a diffuser cap engaging a first inflator end on which the gas discharge opening is located. The cap serves also as coupling means which facilitates fixing of the inflator to a retainer/diffuser device.

It is a feature of the present invention to provide an airbag module having asymmetrical flow inflators but where the resultant gas flow into the airbag is more uniform. Another feature of the invention is to provide an improved airbag in which the neck portion includes a tether.

The foregoing features are provided by an airbag module as set forth in the attached claim 1.
FIGURE 1 shows the components of a prior art passenger airbag module.
FIGURE 3 is an isolated view of the housing.
FIGURE 4 shows an elongated inflator with exit ports at one end.
FIGURE 5 shows a clamp or fastener for the inflator.
FIGURE 6 shows a clamp positioned about the inflator.
FIGURE 7 shows an almost completed airbag turned inside out.
FIGURE 8 shows a main panel of the airbag with the neck portion displaced from the main panel.
FIGURE 9 shows a fully assembled airbag.
FIGUREs 10a-c show intermediate steps in the assembly of a module.
FIGURE 11 shows the inflators being assembled to the housing.
FIGURE 12 illustrates the panels of material used to form the neck assembly.
FIGURE 13 shows the heat shield before it is assembled.
FIGURE 14 shows another view of panels used in the neck assembly.

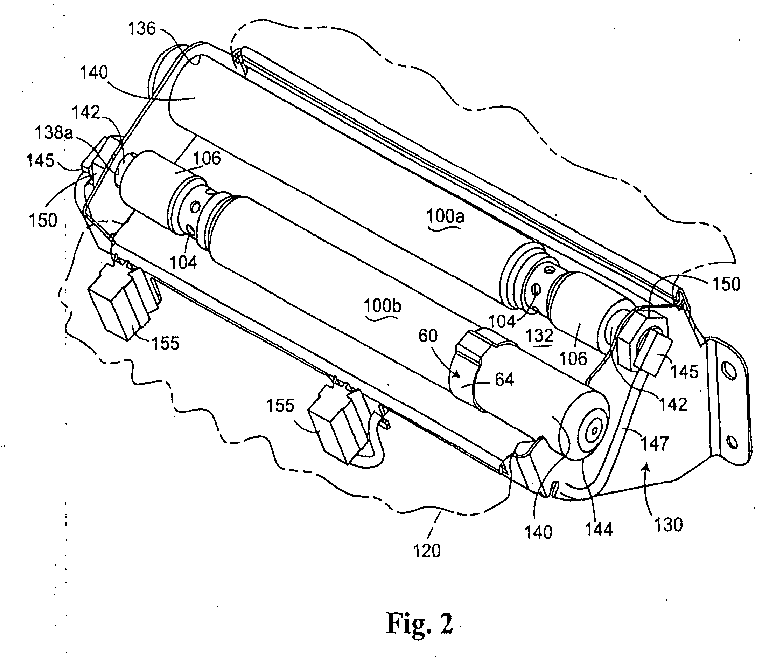

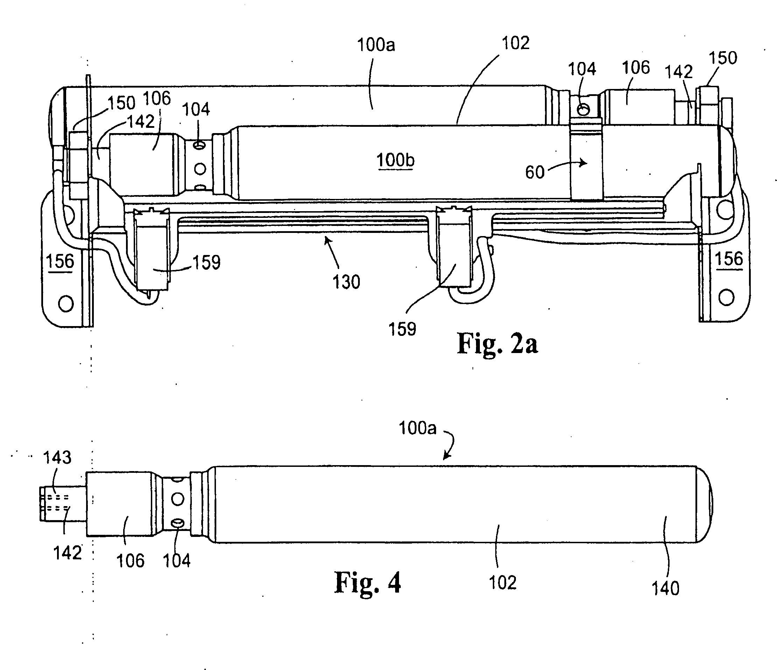

FIGURE 2 shows two cylindrically shaped inflators 100a, 100b mounted to a housing 130, which is described below. The housing 130 functions as a reaction surface against which the inflating airbag reacts as it moves toward a vehicle occupant. In the present invention the inflators are first placed within an airbag and then the inflators and the airbag are secured to the housing. Only a small portion of an airbag 120 has been shown, by phantom line, in FIGURE 2.

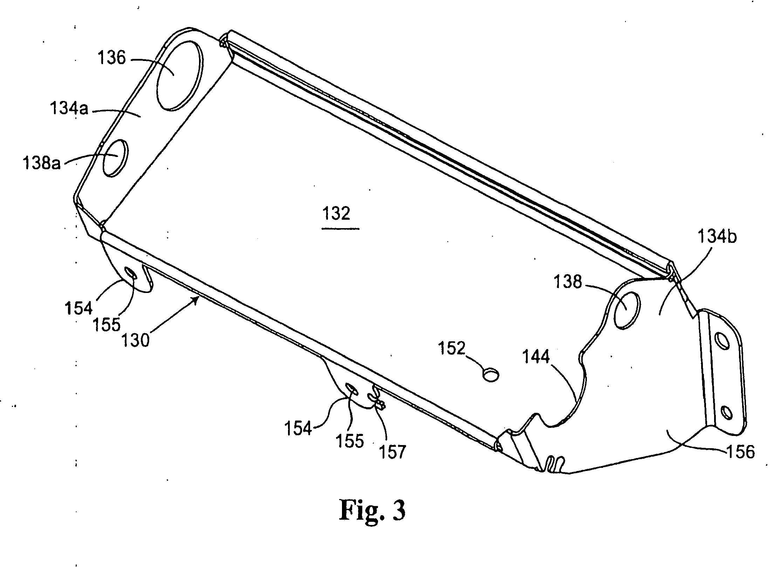

FIGURE 3 shows the details of the housing 130. The housing 130 generally includes a central plate 132 that operates as the reaction surface, and two oppositely oriented inflator mounting flanges 134a, 134b. The central plate may be flat but other shapes can be used. A first flange 134a includes a first opening 136 sized to tightly and slidingly receive an end 140 of inflator 100a while opposite the second flange 134b includes a narrower opening 138 sized to receive the narrow diameter threaded end 142 of the inflator 100a. The first flange 134a includes another small opening 138a sized to receive the threaded narrow diameter end 142 of the inflator 100b. However, the first flange 134b does not include another complete circular opening such as the opening 136, but rather includes a notch 144, such as a circular notch, which conforms to the shape of the end 140 of the inflator 100b. The large end 140 of the inflator 100b rests in the notch 144. The housing 130 includes tabs 154, which are used to install a wiring harness 159 in the correct location. The holes 155 are for wiring harness clips, and the slots 157 position the wires from the harness. Additionally, the housing may include side mounting flanges 156, with mounting holes, only one of which is shown in FIGURE 2. The other mounting flange extends similarly from the flange 134a.

While circular openings and notches shown are compatible with the circular-cylindrical shape of the inflator, the openings and notch can be other shapes as defined by the particular inflator. In FIGURE 2, the respective threaded ends 142 of each inflator are secured to the housing 130 by threaded fasteners such as nuts 150.

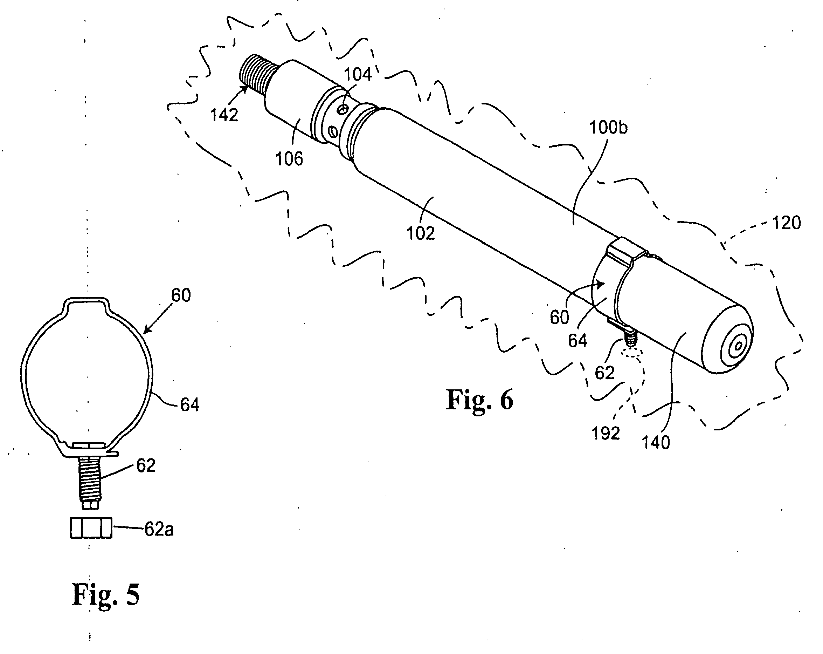

The housing 130 additionally includes a narrow mounting opening 152 to receive the fastener 62 portion of the clamp 60, which is used to secure inflator 100b. The clamp 60, as shown in FIGURE 5, is received about the body 102 of the inflator 100b.

FIGURE 4 shows the exterior of one of the inflators 100a. As is typical of the construction of a hybrid inflator, the body 102 of the inflator forms a pressure vessel. A plurality of exit ports 104 are located remote from the pressure vessel within body 102. While not shown, the pressure vessel is sealed by a burst disk, which is not shown. A burst disk can be opened by a variety of known mechanisms, which will often include a pyrotechnic device 106. This pyrotechnic device 106 includes a quantity of a chemical gas generant and a primer or igniter to ignite the gas generant. When the gas generant is activated, it provides a flame front or pressure wave sufficient to break, melt or burst the burst disk causing the release of compressed gas stored in the pressure vessel. Continued heating of the gas by the burning gas generant raises the temperature of the gas as it enters the airbag 120.

Each inflator 100a, 100b includes a threaded portion 142, which is used to mount the inflator to the housing 130. The mounting threaded portion 142 is hollow and envelops an electrical connector 143, which is connected to the initiator of the pyrotechnic device 106. Electrical signals to and from each inflator are by means of a mating connector 145 and wire(s) 147. The inflator 100b is mounted to the housing 130 with the use of an ear clamp, which is shown in FIGURE 5. The ear clamp 60 includes a threaded stud 142 and a deformable wire portion or sleeve 64. The ear clamp 60 is slid about the body 102 of the inflator and a wire portion 64 is crimped tightly about the exterior of the inflator as illustrated in FIGURE 6.

The opposing mounting configuration can be achieved without the use of a discrete housing such as 130. For example, the housing can be replaced by another support member, which may include a portion of the vehicle seat frame or body frame and the like.

With the inflator mounted as shown above, the pyrotechnic device 106 of each inflator is physically, electrically and thermally isolated from each other. This placement reduces the possibility of a spurious ignition of the one of the inflators when the other inflator is ignited. In the preferred embodiment the size and capacity of each inflator is equal but they can be different. Additionally, the inflators can be activated simultaneously or with a predetermined time delay.

In view of the opposing placement of the exit ports of each inflator and when both inflators are activated, inflation gas will enter the neck of the airbag in a more uniform manner, which obviates the need for a manifold. The housing/inflator combination of FIGURE 2 can be inserted within the neck of an airbag in a conventional manner. Alternately, the inflators can be inserted within the neck of an airbag and then secured to the housing.

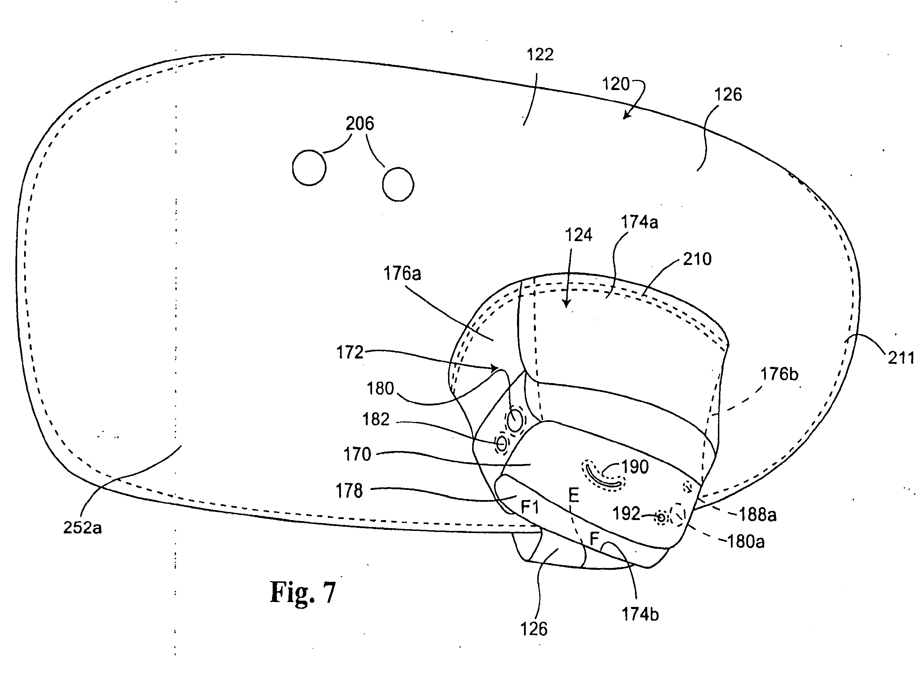

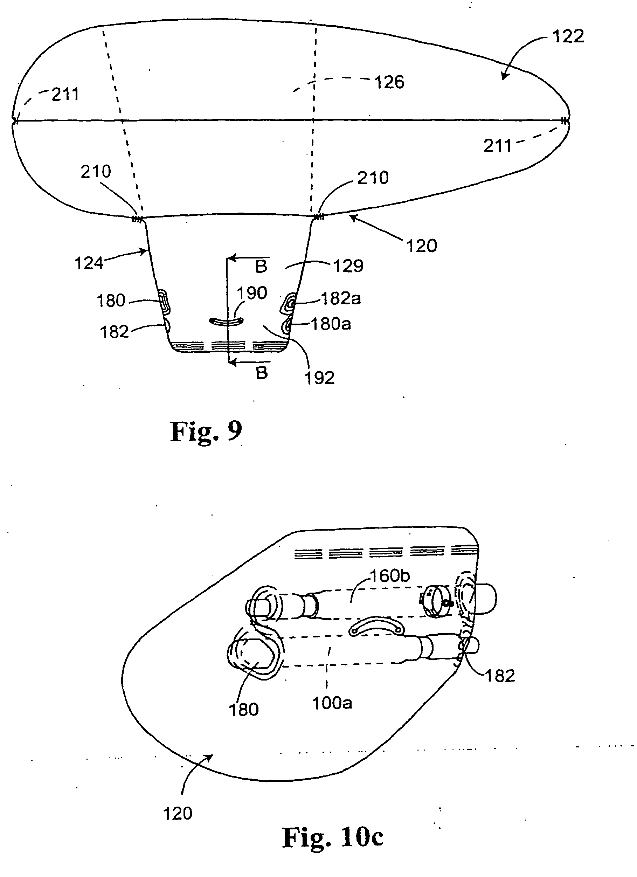

FIGURE 7 shows an airbag 120 that has been turned inside out; however, it will generally have the same configuration when turned right side out, as shown in FIGURE 9. The airbag 120 includes an inflatable cushion main portion 122 with a generally enclosed, tube-like neck assembly 124 secured thereto. An optional tether 126 can extend from the neck assembly 124 to the cushion portion 122. In the preferred embodiment of the invention the tether and neck assembly can be fabricated from a single piece of fabric, which can then be reinforced with other fabric panel sections as needed.

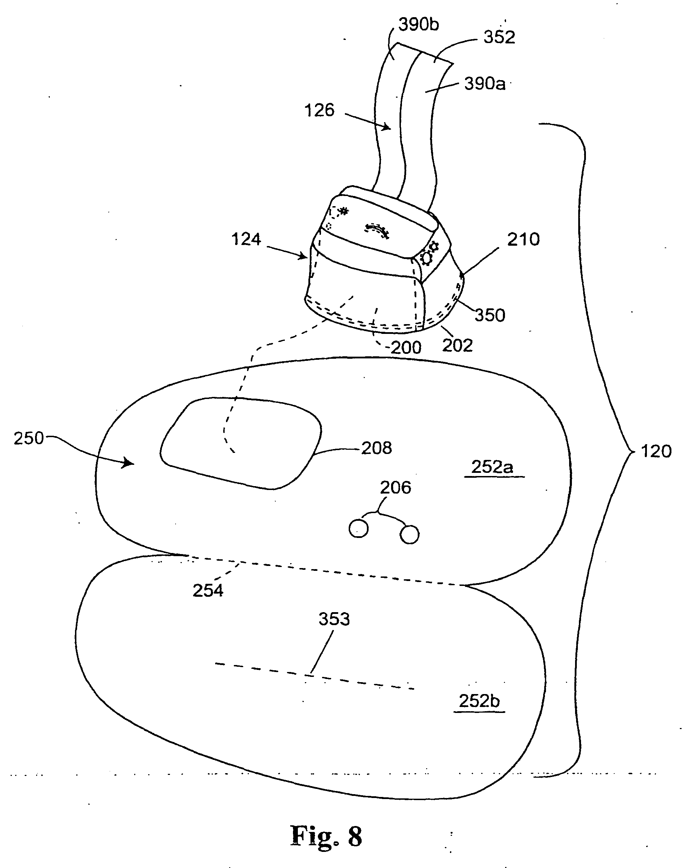

FIGURE 8 shows a partially constructed airbag 120 with a main panel 250 laid flat and with a previously constructed neck assembly 124 displaced from the main panel 250 for the purpose of illustration. The main panel 250 includes panel halves, or panels, 252a, 252b. The panel halves can be generally identical in shape and may be folded about a fold line 254 and sewn about the periphery to form the cushion portion 122 of the airbag. Each panel 252a, 252b can be a separate piece of material. Panel 252b forms the face panel of the airbag while 252a forms the rear panel. Panel 252b includes a marked line or location 256, which identifies the desired location at which the tether 126, if used, is sewn to the face panel 252b. The rear panel 252a includes a plurality of vent holes 206 and a large, oblong opening 208, the perimeter of which is equal to the perimeter of the neck assembly 124. The neck assembly 124 is sewn to the rear panel along seam 210 to achieve the configuration of FIGURE 7. The panel halves are sewn along seam 211.

In the preferred embodiment, the neck portion or assembly 124 resembles a truncated pyramid having an end or bottom 170 and a wall 172, which extends from the bottom 170. The wall 172 can have discrete sides or be conically or cylindrically shaped. The resultant shape defined by the end or ends of the wall 172 will conform to the shape of the opening 108 in the panel 252a. In the illustrated embodiment the wall 172 includes two set of opposed sides 174a,b; 176a,.b. The bottom 170 is shown separated from side 174b, this separation shown by opening 178, which is closed after the bag is turned right-side-out. The side 176a includes openings 180, 182 that correspond to and are aligned with the openings 136, 138 in the end flanges 134a of the housing 130. Additionally, side 176b also has a set of openings 180a, 182a. Opening 182a corresponds to opening 138 of housing 130 and a larger opening 180a has a diameter equal to the diameter of slot 144. Returning briefly to the opening 178, its main purpose is to provide a convenient way to reverse the airbag. After the airbag is pulled right side out this opening is closed, as shown in FIGURE 9.

The bottom or end 170 of the neck or neck portion 124 includes a small slit 190, which serves as an assembly aid. In the illustrated embodiment this slit is arcuately shaped. Additionally the bottom includes a small circular opening 192. The specific construction of the airbag 120 will be described below. Suffice it to say the neck portion 124 can be made as a cylindrical, conical or trapezoidal shape with an opened end or mouth 200 that is secured to a complementarily shaped opening 208 in the panel 252a.

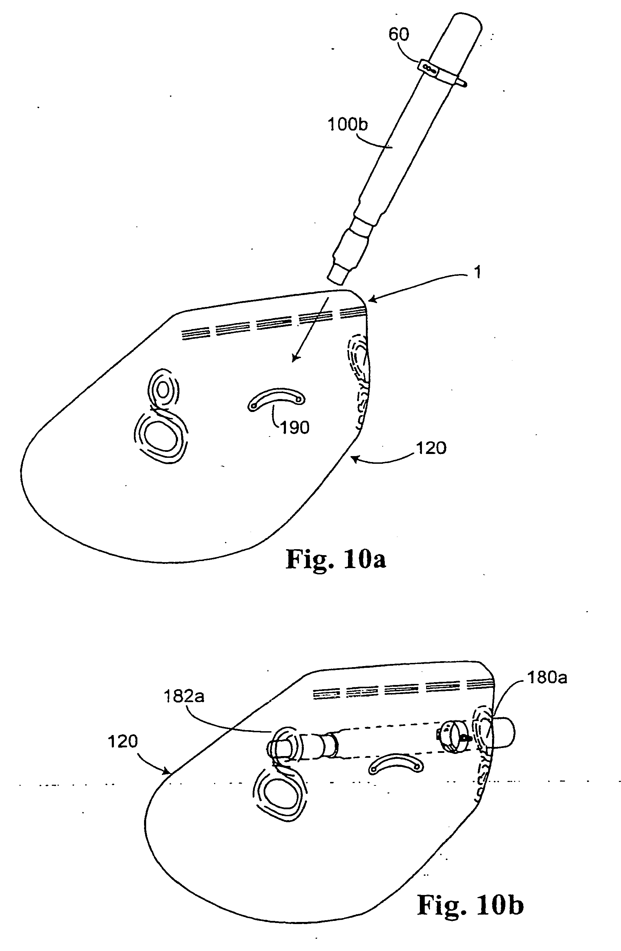

During the assembly of the module 121, a first of the inflators 100b is inserted within a completed airbag, as shown in FIGUREs 9 and 10a. The inflator 100b includes the clamp 60. The inflator 100b is inserted within the bottom 190 of the airbag through the slit 190 and manipulated such that the fastener end 140 extends through the opening 182a and its larger end extends through the opening 180 of the airbag. The stud 62 of the clamp is positioned through the small opening 192 in the bottom 170 of the airbag 120, as shown in FIGURE 10b. Thereafter, the inflator 100a is inserted through the opening in the neck 180a. The inflator 100a is manipulated so that its threaded stud portion 142 extends out of the narrow opening 182 and the larger end 140 extends out of the other opening 180a.

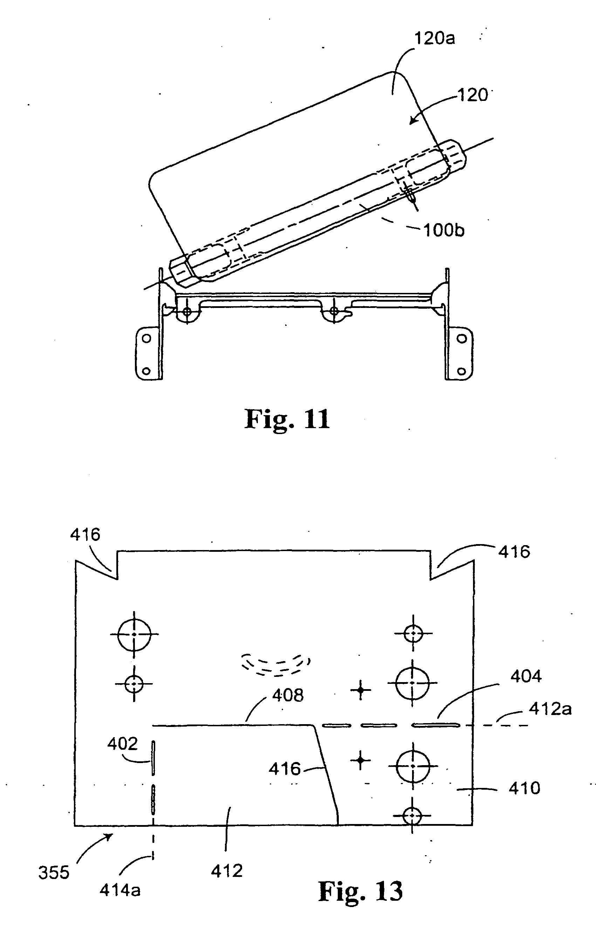

Thereafter, the airbag 120 and the two inflators 100a, 100b in the neck portion 120 and with the respective ends of each inflator extending out of a respective opening, is positioned adjacent the housing 130 and the inflators inserted within the openings in the respective flanges 134a, 134b so that the inflators 100a, 100b take the configuration shown in FIGURE 2. The inflators extending from the airbag 120 can individually be inserted within the housing openings or where possible inserted simultaneously in their respective openings in the flange 134a. While the assembly steps may vary, these steps will include the following procedures. The inflators 100a, 100b and the airbag 120 can be positioned relative to the housing 130 as shown in FIGURE 11. In this elevated position the large end of one inflator 100a and the small end of the other inflator 100b are inserted in the openings 136, 138a. The airbag 120 can be loose and unfolded at this time or folded upon the inflators in a folded airbag pack 120a, which is shown in FIGURE 11. The inflators after being positioned within the openings 136, 138a are lowered onto the plate portion 132 of the housing. As the inflators are lowered, the stud 62 of clamp 60 enters into the housing opening 152. Thereafter one inflator 100a is slid sideways so that its small diameter end 142 enters an opening 138 in a flange 134b. The inflators and clamp are secured to the housing with fasteners 150, 66. If the airbag 120 was not previously folded it can now be folded into the fold pack 120a and placed atop the inflators 100a, 100b and the fold pack secured to the inflators and housing 130 by a band of a tearable material 125 such as Tyvek ®.

Since the exit ports of the two inflators 100a, 100b are symmetrically located relative to the axis of symmetry of the housing, a manifold is not needed to distribute the inflation gasses into the neck 124. By positioning the pyrotechnic device of each inflator remote from that of the other inflator, the heat from one does not impact the operation of the other. Since each inflator extends completely through the airbag, upon inflation, the reaction load is taken by the inflators themselves as the inflator reacts against the housing 130.

The airbag 120 can include a tether 126. The tether 126 can be a separate piece of material, typically airbag fabric, which is sewn to the neck assembly 124 and then to the panel 252a or as described below; the tether 126 can be an integral portion of the neck assembly 124.

The neck assembly 124 can be made from three pieces of fabric. These pieces are a neck or outer panel 350, an inner or intermediate panel 352 and a heat shield 354. The heat shield and the intermediate panel are each aligned to the outer panel 350 and sewn thereto. The outer panel 350 with the other panels thereon is formed into the assembly 124 with the integral tether 126. If the neck panel 350 is sufficiently robust, the intermediate panel and the heat shield can be eliminated. The main panel 350 and the intermediate panel can be made from either a silicon coated or uncoated, woven nylon fabric and the heat shield can be from a woven, nylon fabric heavily coated in silicon.

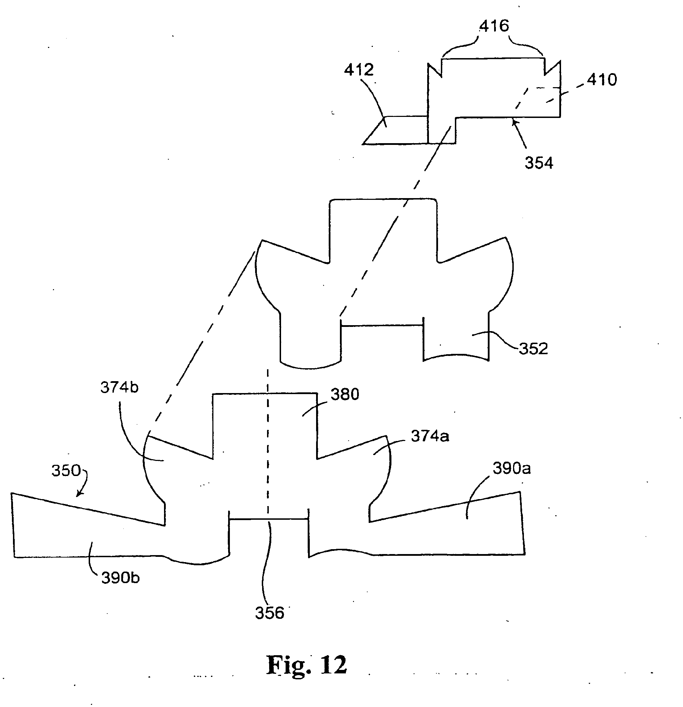

In FIGURE 12, the neck outer panel 350 is symmetric about a centerline 356 having a first curved side portion 374a and a second curved side portion 374b. These two end portions will form the short sides of the neck assembly 124, as shown in FIGURE 7. The panel 350 includes an extending rectangular member 380, which will form the bottom of the neck assembly. Extending respectively from each of the side portions 374a, b are complementary tether flaps 390a, b.

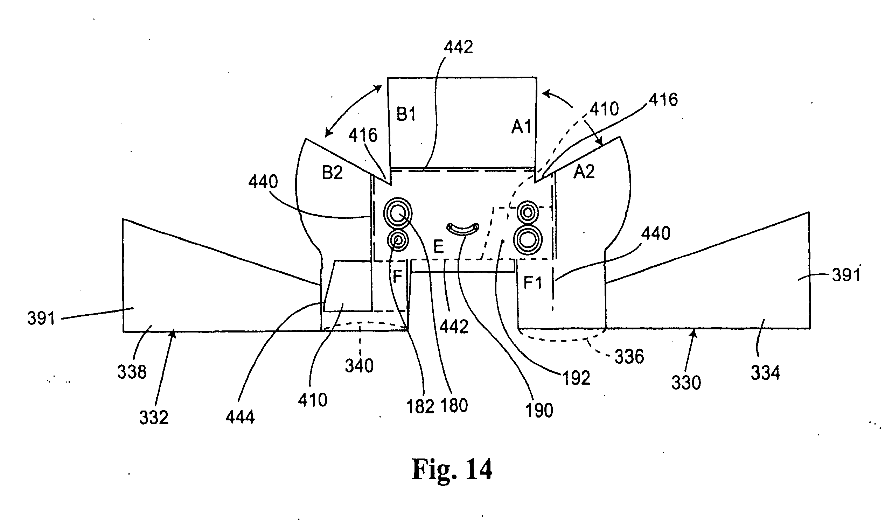

The heat shield 354 shown in FIGURE 12 is the result of a number of secondary operations. The heat shield 354 is first formed from a generally rectangular panel 355, which is shown in FIGURE 13. This panel is cut and manipulated to the shape shown in FIGURE 12. The heat shield 354, or more particularly the panel 355, has a plurality of slots or openings 402, 404 therein, which also form or lie upon or define respective fold lines 414a, 412a. Since the heat shield is made from a coated fabric, it is somewhat stiff and the openings 402, 404 make it easier to fold the flaps 410, 412 along their respective fold lines. The heat shield 354 is cut along two intersecting cut lines 406, 408. That portion of the panel 355 below openings 404 form a flap 410, which is folded along fold line 412a backs as shown in FIGURE 12, and placed under the main part of the panel 355. The cutting of panel 355 also forms a second flap 412. This second flap 412 is folded back along a fold line 414. FIGURE 12 shows the heat shield 354 with the flaps 410, 412 in their folded-back positions. The top portion of the heat shield additionally includes narrow cutouts or notches 416, the purpose of which will be seen below. Each of the panels 350, 352, 354, 355 is shown with and without openings. This is to illustrate that these openings can be made before or after the panels are sewn together.

FIGURE 12 shows the use of the inner panel and the heat shield, but neither is a requirement of the invention. As the neck or throat assembly 124 is in close proximity to the heated gasses produced by the various inflators 100a, 100b, it may be desirable to add an intermediate or inner panel 352 as part of the neck portion or assembly 122.

FIGURE 12 shows the heat shield 354 and the intermediate panel 352 placed upon and aligned to the outer panel 350. These panels are then sewn together along seams 440, 442, 444. Thereafter, the various openings 180, 180a, 182, 182a, 190, 192 can be cut, stamped or burned into the various panel members 350, 352, 354 and added seams sewn about these openings to further secure the panels together. The seams provided about the openings in the airbag for the inflators provide reinforcement to limit deformation of the material about these openings during deployment of the airbag.

The following procedure defines the steps needed to sew the various opposing sides of the outer panel 350 with the inner panel and heat shield in place to form the neck assembly 124. Sides A and A1 are moved together and sewn to each other. Similarly, sides B and B1 are sewn together. The lower edge of 330 of the tether flap 390a includes a flat portion 334 and a convex portion 336. Similarly the lower edge 332 of the tether flap 390b includes a flat portion 338 and an optional concave portion 340. The lower edges 330, 332 are moved together with the concave and convex portions aligned and the straight portions mated and these edges sewn together. This step forms the integral tether 126. When the edges 330, 332 are moved and sewn together it will position edges F and F1 opposite the larger edge E. as shown in FIGURE 14. These edges F, F1 and E form the opening 178 through which the bag is turned inside out. Subsequently, the neck assembly 124, at its periphery 208, is joined to the rear panel 252a at a sew seam 210. Thereafter, the extending end 352 of the sewn-together flaps 390a, 300b, which together form the tether 126, is secured to the face panel at a desired location, generally designated as 353.

Subsequently, the panel halves 252a, 252b are folded over at the centerline and sewn along a peripheral seam 211 to achieve the configuration shown in FIGURE 7. After the peripheral seam 211 is formed, the airbag is turned inside out through opening 178 formed by edges or sides F, F1 and E. This opening 178 is sewn closed, giving the bag 120 its final shape as shown in FIGURE 9.

## Claims

1. An airbag module comprising: a housing/inflator assembly and an airbag assembly linked to the housing/inflator assembly to receive gas to inflate an airbag (120) of the airbag assembly, the housing/inflator assembly comprising a housing (130) and a plurality of inflators (100a, 100b), each inflator having at least one exit port (104) near a first end thereof, each inflator having a respective opposite second end (140), the housing/inflator assembly further including a means for mounting (134a, 134b; 156) the inflators (100a, 100b) relative to one another with the at least one exit port (104) of one of the inflators (100a, 100b) positioned adjacent the second end (140) of a second of the inflators (100a, 100b) and with the second end (140) of the first inflator (100a) adjacent the exit port (104) of the second inflator (100b),
**characterized in that**
said inflators (100a, 100b) are placed within said airbag (120) and said inflators (100a, 100b) and said airbag (120) are secured to said housing (130).

2. The airbag module defined in Claim 1 wherein the mounting means includes a set of opposing first and second end flanges (134a, 134b) with each end flange including mounting features (136, 144) to receive respective ends of the first and second inflators (100a, 100b).

3. The airbag module defined in Claim 2 wherein each inflator (100a, 100b) includes a cylindrically shaped, threaded first end (142) and wherein each of the end flanges (134a, 134b) includes an oppositely located first and second opening (136) to respectively receive the first and the second end of one of the inflators.

4. The airbag module defined in Claim 2 or 3 wherein the flange having the opening to receive the second end of the first inflator (100a) also includes another opening (136) to receive the first end of the second inflator (100b) and wherein the other flange having the opening to receive the first end of the second inflator includes a semi-circular groove (144) upon which the second end (140) of the second inflator rests.

5. The airbag module defined in any of Claims 1 - 4 wherein the airbag (120) includes a neck assembly (124) and a cushion portion (122), the neck assembly extending from the housing/inflator assembly to the cushion portion.

6. The airbag module defined in Claim 5 wherein the first and the second inflators (100a, 100b) are received within the neck assembly (124) with their respective ends (140) extending therefrom and wherein the housing means is external from the airbag (120).

7. The airbag module defined in Claim 5 wherein the neck assembly (124) includes opposing neck sides, each end with a set of openings to receive a respective end of each inflator (100a, 100b).

8. The airbag module defined in Claim 7 wherein the neck assembly (124) includes a main portion joining the neck ends and wherein the main portion, on assembly, is located between the inflators (100a, 100b) and the center of the mounting means (134a, 134b; 156)

9. The airbag module defined in Claim 8 wherein the main portion of the neck assembly (124) includes an opening (152) to receive a clamp (60) that extends from one of the inflators (100a, 100b) through a center portion of the mounting means (134a, 134b; 156).

10. The airbag module defined in Claim 5 wherein the neck assembly (124) portion of the airbag (120) is secured to a main panel (250) of the airbag, the neck assembly including a tether (126) formed of the same material as the neck assembly.

## Patentansprüche

1. Airbagmodul, der eine Gehäuse/Gasgeneratorbaugruppe und eine Airbagbaugruppe aufweist, die mit der Gehäuse/Gasgeneratorbaugruppe verbunden ist, um Gas aufzunehmen, um einen Airbag (120) der Airbagbaugruppe aufzublasen, wobei die Gehäuse/Gasgeneratorbaugruppe ein Gehäuse (130) und eine Vielzahl von Gasgeneratoren (100a, 100b) aufweist, wobei jeder Gasgenerator mindestens eine Austrittsöffnung (104) in der Nähe eines ersten Endes davon aufweist, wobei jeder Gasgenerator ein entsprechendes entgegengesetztes zweites Ende (140) aufweist, wobei die Gehäuse/Gasgeneratorbaugruppe außerdem eine Einrichtung (134a, 134b; 156) für das Montieren der Gasgeneratoren (100a, 100b) relativ zueinander umfasst, wobei die mindestens eine Austrittsöffnung (104) des einen der Gasgeneratoren (100a, 100b) benachbart dem zweiten Ende (140) eines zweiten der Gasgeneratoren (100a, 100b) positioniert ist, und wobei das zweite Ende (140) des ersten Gasgenerators (100a) benachbart der Austrittsöffnung (104) des zweiten Gasgenerators (100b) ist,
**dadurch gekennzeichnet, dass**
die Gasgeneratoren (100a, 100b) innerhalb des Airbags (120) angeordnet sind und die Gasgeneratoren (100a, 100b) und der Airbag (120) am Gehäuse (130) gesichert sind.

2. Airbagmodul nach Anspruch 1, bei dem die Montageeinrichtung eine Reihe von entgegengesetzten ersten und zweiten Endflanschen (134a, 134b) umfasst, wobei jeder Endflansch Montagemerkmale (136, 144) umfasst, um die jeweiligen Enden des ersten und zweiten Gasgenerators (100a, 100b) aufzunehmen.

3. Airbagmodul nach Anspruch 2, bei dem jeder Gasgenerator (100a, 100b) ein zylindrisch geformtes mit Gewinde versehenes erstes Ende (142) umfasst, und bei dem ein jeder der Endflansche (134a, 134b) eine entgegengesetzt angeordnete erste und zweite Öffnung (136) umfasst, um jeweils das erste und das zweite Ende des einen der Gasgeneratoren aufzunehmen.

4. Airbagmodul nach Anspruch 2 oder 3, bei dem der Flansch, der die Öffnung aufweist, um das zweite Ende des ersten Gasgenerators (100a) aufzunehmen, ebenfalls eine weitere Öffnung (136) umfasst, um das erste Ende des zweiten Gasgenerators (100b) aufzunehmen, und bei dem der andere Flansch, der die Öffnung aufweist, um das erste Ende des zweiten Gasgenerators aufzunehmen, eine halbkreisförmige Nut (144) umfasst, auf der das zweite Ende (140) des zweiten Gasgenerators aufliegt.

5. Airbagmodul nach einem der Ansprüche 1 bis 4, bei dem der Airbag (120) einen Einschnürungsaufbau (124) und einen Pufferabschnitt (122) umfasst, wobei sich der Einschnürungsaufbau von der Gehäuse/Gasgeneratorbaugruppe zum Pufferabschnitt erstreckt.

6. Airbagmodul nach Anspruch 5, bei dem der erste und zweite Gasgenerator (100a, 100b) innerhalb des Einschnürungsaufbaus (124) aufgenommen werden, wobei sich ihre jeweiligen Enden (140) von dort aus erstrecken, und bei dem die Gehäuseeinrichtung außerhalb vom Airbag (120) ist.

7. Airbagmodul nach Anspruch 5, bei dem der Einschnürungsaufbau (124) entgegengesetzte Einschnürungsseiten umfasst, jedes Ende mit einer Reihe von Öffnungen, um ein entsprechendes Ende eines jeden Gasgenerators (100a, 100b) aufzunehmen.

8. Airbagmodul nach Anspruch 7, bei dem der Einschnürungsaufbau (124) einen Hauptabschnitt umfasst, der die Einschnürungsenden verbindet, und bei dem der Hauptabschnitt bei der Montage zwischen den Gasgeneratoren (100a, 100b) und der Mitte der Montageeinrichtung (134a, 134b; 156) angeordnet wird.

9. Airbagmodul nach Anspruch 8, bei dem der Hauptabschnitt des Einschnürungsaufbaus (124) eine Öffnung (152) umfasst, um eine Klemme (60) aufzunehmen, die sich von einem der Gasgeneratoren (100a, 100b) durch einen mittleren Abschnitt der Montageeinrichtung (134a, 134b; 156) erstreckt.

10. Airbagmodul nach Anspruch 5, bei dem der Abschnitt des Einschnürungsaufbaus (124) des Airbags (120) an einer Hauptbahn (250) des Airbags gesichert ist, wobei der Einschnürungsaufbau einen Haltegurt (126) umfasst, der aus dem gleichen Stoff wie der Einschnürungsaufbau gebildet wird.

## Revendications

1. Module de coussin d'air comprenant: un assemblage de boîtier/dispositif de gonflement et un assemblage de coussin d'air relié à l'assemblage de boîtier/dispositif de gonflement pour recevoir du gaz afin de gonfler un coussin d'air (120) de l'assemblage de coussin d'air, l'assemblage de boîtier/dispositif de gonflement comprenant un boîtier (130) et plusieurs dispositifs de gonflement (100a, 100b), chaque dispositif de gonflement comportant au moins un orifice de sortie (104) près d'une première extrémité correspondante, chaque dispositif de gonflement comportant une deuxième extrémité opposée respective (140), l'assemblage de boîtier/dispositif de gonflement comportant en outre un moyen (134a, 134b; 156) pour assurer le montage mutuel les dispositifs de gonflement (100a, 100b), au moins un orifice de sortie (104) de l'un des dispositifs de gonflement (100a, 100b) étant positionné près de la deuxième extrémité (140) d'un deuxième des dispositifs de gonflement (100a, 100b), la deuxième extrémité (140) du premier dispositif de gonflement (100a) étant agencée près de l'orifice de sortie (104) du deuxième dispositif de gonflement (100b);
**caractérisé en ce que**
lesdits dispositifs de gonflement (100a, 100b) sont agencés dans ledit coussin d'air (120), lesdits dispositifs de gonflement (100a, 100b) et ledit coussin d'air (120) étant fixés sur ledit boîtier.

2. Module de coussin d'air selon la revendication 1, dans lequel le moyen de montage englobe un groupe de première et deuxième brides d'extrémité opposées (134a, 134b), chaque bride d'extrémité englobant des structures de montage (136, 144) pour recevoir les extrémités respectives des premier et deuxième dispositifs de gonflement (100a, 100b).

3. Module de coussin d'air selon la revendication 2, dans lequel chaque dispositif de gonflement (100a, 100b) englobe une première extrémité filetée de forme cylindrique (142), chacune des brides d'extrémité (134a, 134b) englobant des premier et deuxième ouvertures opposées (136) pour recevoir respectivement les première et deuxième extrémités de l'un des dispositifs de gonflement.

4. Module de coussin d'air selon les revendications 2 ou 3, dans lequel la bride comportant l'ouverture pour recevoir la deuxième extrémité du premier dispositif de gonflement (100a) englobe également une autre ouverture (136) pour recevoir la première extrémité du deuxième dispositif de gonflement (100b), l'autre bride comportant l'ouverture pour recevoir la première extrémité du deuxième dispositif de gonflement englobant une rainure semi-circulaire (144) sur laquelle repose la deuxième extrémité (140) du deuxième dispositif de gonflement.

5. Module de coussin d'air selon l'une quelconque des revendications 1 à 4, dans lequel le coussin d'air (120) englobe un assemblage de col (124) et une partie de coussin (122), l'assemblage de col s'étendant de l'assemblage de boîtier/dispositif de gonflement vers la partie de coussin.

6. Module de coussin d'air selon la revendication 5, dans lequel les premier et deuxième dispositifs de gonflement (100a, 100b) sont reçus dans l'assemblage de col (124) avec leurs extrémités respectives (140) en extension, le moyen de boîtier étant externe au coussin d'air (120).

7. Module de coussin d'air selon la revendication 5, dans lequel l'assemblage de col (124) englobe des côtés de col opposés, chaque extrémité comportant un groupe d'ouvertures pour recevoir une extrémité respective de chaque dispositif de gonflement (100a, 100b).

8. Module de coussin d'air selon la revendication 7, dans lequel l'assemblage de col (124) englobe une partie principale reliant les extrémités du col, la partie principale étant agencée lors de l'assemblage entre les dispositifs de gonflement (100a, 100b) et le centre du moyen de montage (134a, 134b; 156).

9. Module de coussin d'air selon la revendication 8, dans lequel la partie principale de l'assemblage de col (124) englobe une ouverture (152) pour recevoir une attache (60), s'étendant à partir de l'un des dispositifs de gonflement (100a, 100b) à travers une partie centrale du moyen de montage (134a, 134b; 156).

10. Module de coussin d'air selon la revendication 5, dans lequel la partie d'assemblage de col du coussin d'air (120) est fixée sur un panneau principal (250) du coussin d'air, l'assemblage de col englobant une sangle de fixation (126) composée du même matériau que l'assemblage de col.
